# NEW EUROPEAN PATENT SPECIFICATION

(11) **EP 3 134 474 B2**
(45) Date of publication and mention of the opposition decision: **07.01.2026**
(45) Mention of the grant of the patent: 02.10.2019
(21) Application number: 15721152.5
(22) Date of filing: 24.04.2015
(51) Int. Cl.: C08L 55/02, C08L 25/12, C08L 69/00, C23C 18/16

(54) **POLYMER BLEND FOR METAL PLATING**
POLYMERMISCHUNG ZUR METALLPLATTIERUNG
MÉLANGE DE POLYMÈRES POUR REVÊTEMENT MÉTALLIQUE

(30) Priority: 25.04.2014 EP 14165951
(43) Date of publication of application: 01.03.2017
(73) Proprietor: INEOS Styrolution Group GmbH, 60325 Frankfurt am Main (DE)
(72) Inventor: EISENTRÄGER, Frank, 50996 Köln (DE); NIESSNER, Norbert, 67159 Friedelsheim (DE); WIEDEL, Eugen, 79853 Lenzkirch (DE)
(74) Representative: Jacobi, Markus Alexander
(86) International application number: PCT/EP2015/058877
(87) International publication number: WO 2015/162239

(56) References cited:
- WO-A1-2013/100336
- WO-A1-99/65991
- CN-B- 102 367 327
- US-A- 5 162 419
- US-A1- 2013 203 909
- US-A1- 2013 203 909

## Description

The present invention relates to polymer blends for metal plating, in particular for electroplating, metal-plated polymer blends and their uses e. g. for automotive applications. The need for automotive exterior chromed applications with excellent surface appearance and good scratch/scuff resistance is well known. Typical exterior chrome applications (e.g. grilles/wheel covers) require no surface defects such as pits, scratches upon initial factory installation and over ten years field performance without delamination, blisters or cracks.

The trend in the auto industry is to continue to use (co)polymers such as Acrylonitrile-Butadiene-Styrene (ABS) and blends made from ABS and Polycarbonate (ABS+PC) for chrome plating.

WO 99/65991 discloses a thermoplastic molding composition and a molded article comprising the composition which surface is coated with an electrolessly deposited metallic material. The composition comprises 51 to 90 parts by weight (pbw) of an aromatic polycarbonate, up to 30 pbw of a rubber free styrene-acrylonitrile copolymer (SAN), 5 to 30 pbw of a first graft copolymer and 1 to 15 pbw of a second graft copolymer, and a wax added to said resin.

US 4,847,153 discloses a metal plated molded part prepared from a thermoplastic molding composition comprising a blend of a polycarbonate (20 to 95, preferably 30 to 80 phr, in all examples 52 wt.-%), an ABS graft polymer and an elastomeric rubber. Molded discs were coated with layers of metals by electroless plating.

JP-A 2010-159457 discloses a method for direct electroplating of plastics, in particular of PC/ABS-blends. The PC/ABS-plastic material contains not less than 50% of polycarbonate.

JP-A 2011-236263 describes an ABS+PC resin composition for metal-plating and a plated resin product. The resin composition is composed of graft copolymers A1 and A2 based on diene rubbers, a SAN-copolymer and a polycarbonate resin. The content of the polycarbonate resin is between 20 and 70 mass%, preferably between 35 and 65 mass%.

WO 2013/115903 discloses a thermoplastic polycarbonate blend composition with improved electroplate adhesion. The composition comprises 40 to 75 wt.%, preferably 45 to 55 wt.%, of a polycarbonate resin, 40 to 48 wt.% of a first impact modifier (ABS graft copolymer) and 1 to 7 wt.% of a second impact modifier (methacrylate butadiene styrene = MBS). Molded plaques were produced and electroplated.

The properties of the finished chrome-plated parts according to the state of the art such as surface quality, impact resistance, and scratch/scuff resistance are not yet satisfying for the original equipment manufacturers or end use customers. Thus, there is a need for metal plateable plastics with improved properties as afore mentioned.

Therefore, it is an object of the invention to provide (co)polymer blends for metal plating, in particular electroplating, which are metal-plateable, in particular chrome-plateable, and deliver a high initial quality and a maximum long term quality.

A further object of the invention is to provide metal-plated molded articles which have an improved plating grade, good adhesion and thermal cycling adherence while still maintaining superior mechanical properties. An important pre-condition is the benign processing behavior, it is important to the processor that the "temperature window" of processing is broad.

A first aspect of the invention is a thermoplastic molding composition comprising (or consisting of) components A) to C):
A) 30 to 40 wt.% of at least one graft rubber copolymer (A), obtained by emulsion polymerization of styrene and acrylonitrile in a weight ratio of 95:5 to 50:50, styrene and/or acrylonitrile being able to be partially or completely replaced by [alpha]-methylstyrene, methyl methacrylate or N-phenylmaleimide or mixtures thereof, in the presence of at least one polymer latex (a) of a conjugated diene;
B) 30 to 40 wt.% of at least one rubber free vinyl copolymer of 50 to 99 percent (B1) and 1 to 50 percent (B2), the percent values being relative to the weight of the copolymer, where (B1) is at least one member selected from the group consisting of styrene, α-methyl styrene, nucleus-substituted styrene, and methyl methacrylate and where (B2) is at least one member selected from the group consisting of acrylonitrile, methyl methacrylate, maleic anhydride, N-alkyl-substituted maleic imide and N-aryl-substituted maleic imide;
C) 25 to 34% by weight of at least one aromatic polycarbonate;

and wherein the sum of components A), B) and C) totals 100% by weight,
and wherein the thermoplastic molding composition comprises as component A two or more graft rubber polymers (A1), (A2), (A3), etc. which are different in the mean particle diameter d₅₀ of the polymer latex (a) of the conjugated diene.

In the above mentioned copolymers A) and B), styrene is often partly or completely replaced by α-methylstyrene and acrylonitrile is often partly or completely replaced by methyl methacrylate.

The invention also relates to a thermoplastic molding composition comprising as component B a copolymer of styrene and acrylonitrile, which in a preferred embodiment is made from 69 to 81% by weight of styrene and from 19 to 31% by weight of acrylonitrile.

The invention also relates to a thermoplastic molding composition comprising as component B 30 to 40 wt.% of a copolymer of styrene and acrylonitrile, which is made by continuous bulk polymerization, and which contains from 69 to 81% by weight of styrene and from 19 to 31% by weight of acrylonitrile, in particular contains 75.5 weight % of styrene and 24.5 weight % of acrylonitrile.

The invention also relates to a thermoplastic molding composition, comprising as component A a graft rubber copolymer obtained by emulsion polymerization, preferably made of styrene and acrylonitrile in a weight ratio of 80:20 to 65:35 in the presence of at least one polybutadien, such as a polymer latex (a) of butadiene.

The invention relates to a thermoplastic molding composition comprising as component A two or more graft rubber polymers (A1), (A2), (A3), etc. which are different in the mean particle diameter d₅₀ of the polymer latex (a) of the conjugated diene. The component A can e.g. comprise two, three or four different poly-butadien rubbers.

The invention also relates to a thermoplastic molding composition, comprising as component A three graft rubber polymers (A1), (A2), (A3), wherein the mean particle diameter d₅₀ of the polymer latex (a1) is 230 to 330 nm, the mean particle diameter d₅₀ of the polymer latex (a2) is 340 to 480 nm, and the mean particle diameter d₅₀ of the polymer latex (a3) is 10 to 220 nm.

The invention also relates to the use of the thermoplastic molding composition as described above for covering surfaces, in particular for electroplating.

The invention also relates to a shaped article comprising the thermoplastic molding composition as described above, where the surface preferably is coated with an electroplated metal. The Use of the metal-plated shaped article for automotive applications is also one aspect of the invention.

The electroplating process of the invention comprises the following steps:
i1) providing of a substrate made from a thermoplastic molding composition according to any of claims 1 to 8,
i2) optionally cleaning/rinsing,
i3) etching,
i4) activation,
i5) acceleration,
i6) electroless chemical metal plating, in particular nickel,
i7) deposition of one or more metal layers, in particular copper, nickel or chromium) by electroplating.

Preferred are thermoplastic molding compositions comprising (or consisting of) components A) to C) in the following amounts:
Component A) - 30 to 40 wt.%,
Component B) - 30 to 40 wt.%,
Component C) - 28 to 32 wt.%,
and wherein A)+B)+C) totals 100% by weight.

In addition, the composition of the invention may contain one or more additives D, such as plasticizers, waxes, antioxidants, plating additives, silicone oil, stabilizers, flame-retardants, fibers, mineral fibers, mineral fillers, dyes, pigments and the like.

Said additives D may optionally be present in the polymer composition in low amounts such as 0.1 to 5 parts by weight, preferably 0.1 to 3 parts by weight, per 100 parts resin of the total of components A, B, and C.

Furthermore the polymer composition as afore-mentioned can optionally comprise one or more other rubber-free thermoplastic polymers E, such as polyesters and polyamides. Said polymers E can be added in amounts of 0.1 to 10 parts by weight, per 100 parts resin of the total of components A, B, and C.

According to one embodiment of the invention, it is preferred that no further thermoplastic polymer E is present.

### Component A

The average particle size d₅₀ of the graft rubber copolymer (A) is generally from 50 to 700 nm, preferably from 60 to 600 nm, and particularly preferably from 70 to 500 nm. The particle size distribution of the graft rubber copolymer (A) can be bi-, or poly-modal. The particle size distribution can be determined by standard methods.

According to one embodiment, the particle size distribution of the graft rubber copolymer (A) is bimodal, and the first maximum of the particle size distribution lies within the range from 80 to 150 nm, and the second maximum of the particle size distribution lies within the range from 200 to 500 nm.

According to a further embodiment, the particle size distribution of the graft rubber copolymer (A) is tri-modal, and the first maximum of the particle size distribution lies within the range from 80 to 150 nm, and the second and third maximum of the particle size distribution lies within the range from 200 to 500 nm.

To achieve a bi-, tri- or polymodal particle size distribution of the graft polymer (A), it is possible to prepare, separately from one another in the usual manner, two or more different graft polymers A1), A2) etc. differing in their mean particle size, and to mix said graft polymers A1), A2) etc. in the desired mixing ratio.

As an alternative for achieving bi-, tri- or poly-modal particle size distributions of the graft polymer (A), between the preparation of the polymer latex (a), and the grafting of the graft co-monomers on said polymer latex as graft base, an agglomeration step can be carried out by use of an agglomeration copolymer, in order to adjust the particle sizes and particle size distributions in a controlled manner. The person skilled in the art is aware of various processes for partial or complete agglomeration of the graft (B1), see EP-A 1 305 345, EP-A 029 613, EP-A 007 810, DE-A 12 33 131, DE-A 12 58 076 and DE-A 21 01 650.

A suitable graft rubber copolymer (A) prepared by aid of an agglomeration copolymer and the corresponding agglomeration process are disclosed in WO 2008/020012 (in particular: pages 3, line 31 to page 4, line 8 and pages 13, line 27 to page 15, line 33).

The polymer latex (a) is usually produced by emulsion polymerization of a conjugated diene, preferably butadiene and/or isoprene, more preferably butadiene.

In the context of this invention butadiene means 1,3-butadiene.

Optional, but preferred is the emulsion polymerization according to the so-called seed polymerization technique, in which first of all a finely particulate polymer, preferably a butadiene, a butadiene/styrene or a styrene polymer, is produced as seed latex and is then polymerised further with diene monomers into larger particles (see for example in Houben-Weyl, Methoden der Organischen Chemie, Makromolekulare Stoffe, Part 1, p. 339 (1961), Thieme Verlag Stuttgart). In this connection the process is preferably carried out using a seed batch process or a continuous seed flow process.

As co-monomers there may be used up to 50 wt. % (referred to the total amount of monomer used for the butadiene polymer production) of one or more monomers copolymerisable with butadiene and/or isoprene, preferably butadiene. Examples of suitable monomers include: chloroprene, acrylonitrile, styrene, [alpha]-methyl styrene, C₁-C₄-alkylstyrenes, C₁-C₈-alkyl acrylates, C₁-C₈-alkyl meth-acrylates, alkylene glycol diacrylates, alkylene glycol dimethacrylates, divinyl benzene; butadiene is preferably used alone or mixed with up to 20 wt. %, preferably with up to 10 wt. %, of styrene and/or acrylonitrile. Also styrene derivatives like alpha-methylstyrene, as well as alkyl-(meth)acrylates on N-phenylmaleinimide are examples for comonomers. In gerenal, all radically copolymerizable monomers are suitable. The amount has to be carefully selected, so that the resulting rubber latex still has rubber like properties (i.e. functions as impact modifier) at room temperature, preferably also down to -40 °C.

As seed latex polymers there are preferably used butadiene polymers such as polybutadiene, butadiene/styrene copolymers, butadiene/acrylonitrile copolymers, or polymers obtained from the aforementioned monomers. In principle there may also be used other finely particulate latex polymers, for example polystyrene or styrene copolymers, poly(methyl methacrylate) or methyl methacrylate copolymers, as well as polymers of other vinyl monomers.

Preferred seed latex polymers are polybutadiene latices.

In this context, seed latices with a mean particle diameter d₅₀ of 10 to 220 nm, preferably 20 to 210 nm, more preferably 30 to 200 nm, even more preferably 80 to 150 nm, are used in the production of the polymer latex (a).

When using seed latices with mean particle diameters d50 above 80 nm, preferably above 90 nm and particularly preferably above 100 nm, the seed latices themselves may also preferably be produced by seed polymerization. For this purpose there are preferably used seed latices with mean particle diameters d₅₀ of 10 to 60 nm, preferably 20 to 50 nm.

According to the invention two or more graft rubber polymers (A1), (A2), (A3) etc. are used as component (A), which are different in the mean particle diameter d₅₀ of the polymer latex (a) of the conjugated diene.

According to a preferred embodiment of the invention the graft rubber polymer (A) is a mixture of graft rubber polymer (A1), graft rubber polymer (A2), and optionally graft rubber polymer (A3).

The graft rubber polymer (A1) is obtained by emulsion polymerization of styrene and acrylonitrile in a weight ratio of 95:5 to 50:50, styrene and/or acrylonitrile being able to be partially or completely replaced by [alpha]-methylstyrene, methyl methacrylate or N-phenylmaleimide or mixtures thereof, in the presence of a polymer latex (a1) of butadiene having a mean particle diameter d₅₀ of 230 to 330 nm, preferably 240 to 320 nm and particularly preferably 250 to 310 nm.

The polymer latex (a1) has a mean particle diameter d₅₀ of 230 to 330 nm, preferably 240 to 320 nm and particularly preferably 250 to 310 nm. The gel content of (a1) is 30 to 80 wt. %, preferably 40 to 75 wt. % and particularly preferably 45 to 70 wt. %. The gel content is measured by standard methods.

The graft rubber polymer (A2) is obtained by emulsion polymerization of styrene and acrylonitrile in a weight ratio of 95:5 to 50:50, styrene and/or acrylonitrile being able to be partially or completely replaced by [alpha]-methylstyrene, methyl methacrylate or N-phenylmaleimide or mixtures thereof, in the presence of a polymer latex (a2) of butadiene having a mean particle diameter d₅₀ of 340 to 480 nm, preferably 350 to 470 nm, and particularly preferably 360 to 460 nm.

The polymer latex (a2) has a mean particle diameter d₅₀ of 340 to 480 nm, preferably 350 to 470 nm, and particularly preferably 360 to 460 nm. The gel content of (a2) is 50 to 95 wt. %, preferably 55 to 90 wt. %, and particularly preferably 60 to 85 wt. %.

The graft rubber polymer (A3) is obtained by emulsion polymerization of styrene and acrylonitrile in a weight ratio of 95:5 to 50:50, styrene and/or acrylonitrile being able to be partially or completely replaced by [alpha]-methylstyrene, methyl methacrylate or N-phenylmaleimide or mixtures thereof, in the presence of a polymer latex (a3) of butadiene having a mean particle diameter d₅₀ of 10 to 220 nm, preferably 20 to 210 nm, particularly preferably 30 to 200 nm, more preferably 80 to 150 nm.

The butadiene polymer latex (a3) has a mean particle diameter d₅₀ of 10 to 220 nm, preferably 20 to 210 nm, particularly preferably 30 to 200 nm, and more preferably 80 to 150 nm.

The gel content of (a3) is 30 to 98 wt. %, preferably 40 to 95 wt. %, and particularly preferably 50 to 92 wt. %.

The seed latex, preferably a butadiene polymer (PB) latex, has a mean particle diameter _{d}50 of 10 to 60 nm, preferably 20 to 50 nm.

The gel content of the seed latex is 10 to 95 wt. %, preferably 20 to 90 wt. %, and particularly preferably 30 to 85 wt. %.

The mean particle diameter d-50 may be determined by ultracentrifuge measurements (see W. Scholtan, H. Lange: Kolloid Z. & Z. Polymere 250, p. 782 to 796 (1972)), the specified values for the gel content referring to the determination according to the wire cage method in toluene (see Houben-Weyl, Methoden der Organischen Chemie, Makromolekulare Stoffe, Part 1, p. 307 (1961), Thieme Verlag Stuttgart).

The gel contents of the butadiene polymer latices may in principle be adjusted in a manner known per se by employing suitable reaction conditions (e.g. high reaction temperature and/or polymerization up to a high conversion, as well as optionally the addition of crosslinking substances in order to achieve a high gel content, or for example low reaction temperature and/or termination of the polymerization reaction before too high a degree of crosslinking has occurred, as well as optionally the addition of molecular weight regulators, such as for example n-dodecyl mercaptan or t-dodecyl mercaptan in order to achieve a low gel content). As emulsifiers there may be used conventional anionic emulsifiers such as alkyl sulfates, alkyl sulfonates, aralkyl sulfonates, soaps of saturated or unsaturated fatty acids, as well as alkaline disproportionated or hydrogenated abietinic acid or tall oil acid, and preferably emulsifiers are used containing carboxyl groups (e.g. salts of C₁₀-C₁₈ fatty acids, disproportionated abietinic acid, emulsifiers according to DE-OS 36 39 904 and DE-OS 39 13 509).

The preparation of the graft rubber polymers (A1), (A2) and (A3) may be carried out in any appropriate manner by separate grafting of the butadiene polymer latices (a1), (a2) and (a3) in separate reactions or by joint grafting of arbitrary mixtures selected from the butadiene polymer latices (a1), (a2) and (a3) during one reaction or two reactions or three reactions.

In this connection the graft polymerization(s) may be carried out according to any suitable processes but is/are preferably carried out in such a way that the monomer mixture is continuously added to the butadiene polymer latex (a1) and/or to the butadiene polymer latex (a2) and/or to the butadiene polymer latex (a3) and/or to arbitrary mixtures selected from the butadiene polymer latices (a1), (a2) and (a3), and is polymerised.

In this connection special monomer/rubber ratios are preferably maintained and the monomers are added in a manner known per se to the rubber.

In order to produce the components (A1), (A2) and (A3) according to the preferred embodiment of the invention, preferably 15 to 50 parts by weight, particularly preferably 20 to 40 parts by weight, of a mixture of styrene and acrylonitrile that may optionally contain up to 50 wt. % (referred to the total amount of the monomers used in the graft polymerization) of one or more monomers, are polymerised in the presence of 50 to 85 parts by weight, preferably 60 to 80 parts by weight (in each case referred to solids) of the butadiene polymer latex (a1) and/or of the butadiene polymer latex (a2) and/or of the butadiene polymer latex (a3) and/or arbitrary mixtures selected from the butadiene polymer latices (a1), (a2), and (a3).

The monomers used in the graft polymerization are preferably mixtures of styrene and acrylonitrile in a weight ratio of 95:5 to 50:50, particularly preferably in a weight ratio of 80:20 to 65:35, wherein styrene and/or acrylonitrile may be wholly or partially replaced by copolymerisable monomers, preferably by [alpha]-methylstyrene, methyl methacrylate or N-phenylmaleimide. In principle arbitrary further copolymerisable vinyl monomers may additionally be used in amounts of up to ca. 10 wt. % (referred to the total amount of the monomers).

In particular preferred as graft monomers are mixtures of styrene and acrylonitrile alone in a weight ratio of 95:5 to 50:50, particularly preferably in a weight ratio of 80:20 to 65:35.

In addition molecular weight regulators may be used in the graft polymerization, preferably in amounts of 0.01 to 2 wt. %, particularly preferably in amounts of 0.05 to 1 wt. % (in each case referred to the total amount of monomers in the graft polymerization stage).

Suitable molecular weight regulators are for example alkyl mercaptans such as n-dodecyl mercaptan, t-dodecyl mercaptan; dimeric [alpha]-methylstyrene; terpinolene.

Suitable initiators that may be used include inorganic and organic peroxide, e.g. H₂O₂, di-tert.-butyl peroxide, cumene hydroperoxide, dicyclohexyl percarbonate, tert.-butyl hydroperoxide, p-menthane hydroperoxide, azo initiators such as azobisisobutyronitrile, persalts such as ammonium, sodium or potassium persulfate, potassium perphosphate, sodium perborate, as well as redox systems. Redox systems consist as a rule of an organic oxidising agent and a reducing agent, in which connection heavy metal ions may in addition be present in the reaction medium (see Houben-Weyl, Methoden der Organischen Chemie, Vol. 14/1, pp. 263 to 297).

The polymerization temperature is in general 25°C to 160 °C, preferably 40°C to 90° C. Suitable emulsifiers are mentioned above.

The graft polymerization may be carried out under normal temperature conditions, i.e. isothermally; the graft polymerization is however preferably carried out so that the temperature difference between the start and end of the reaction is at least 10°C, preferably at least 15°C, and particularly preferably at least 20° C.

In order to produce the components A1), A2) and A3) according to one of the preferred embodiments of the invention, the graft polymerization may preferably be carried out by continuous addition of the monomers in such a way that 55 to 90 wt. %, preferably 60 to 80 wt. % and particularly preferably 65 to 75 wt. % of the total amount of monomers used in the graft polymerization are metered in during the first half of the overall time for metering in the monomers; the remaining proportion of the monomers is metered in within the second half of the overall time for metering in the monomers.

### Component B

The rubber-free, thermoplastic vinyl copolymer component (B)
of the present invention, contains
B1) 50 to 99 percent relative to the weight of the copolymer of at least one member selected from the group consisting of styrene, alpha methyl styrene, nucleus-substituted styrene and methylmethacrylate and
B2) 1 to 50 percent relative to the weight of the copolymer of at least one member selected from the group consisting of acrylonitrile, methyl methacrylate, maleic anhydride, N-alkyl-substituted maleicimide and N-aryl-substituted maleic imide.

The weight average molecular weight (as determined by light scattering or sedimentation) of the copolymer of component (B) is often in the range of 15,000 to 200,000 g/mol.

Particularly preferred ratios by weight of the components making up the copolymer B are 60 to 95 percent of (B1) and 40 to 5 percent of (B2).

Particularly preferred are copolymers (B) containing proportions of incorporated monomer units (B2) of < 32 wt. %.

Particularly preferred copolymers (B) include those of styrene with acrylonitrile, optionally with methyl methacrylate; copolymers of alpha-methyl styrene with acrylonitrile, optionally with methyl methacrylate and copolymers of styrene and alpha-methyl styrene with acrylonitrile, optionally with methyl methacrylate.

More preferred are copolymers (B) of styrene with acrylonitrile of the SAN type incorporating comparatively little acrylonitrile (not more than 31% by weight).

Most preferred are copolymers as component (B) made from, based on (B),
B1) from 69 to 81% by weight of at least one vinylaromatic monomer, in particular styrene, and
B2) from 19 to 31% by weight of acrylonitrile.

Among the afore-mentioned most preferred copolymers (B) those having a viscosity number VN (determined according to DIN 53726 at 25°C, 0.5% by weight in dimethylformamide) of from 50 to 120 ml/g are in particular preferred.

The copolymers of component B are known and the methods for their preparation, for instance, by radical polymerization, more particularly by emulsion, suspension, solution and bulk polymerization are also well documented in the literature.

Details concerning the production of these resins are described for example in US 4,009,226 and US 4,181,788. Vinyl resins produced by bulk polymerization or solution polymerization have proved to be particularly suitable. The copolymers may be added alone or as an arbitrary mixture.

### Component C

Suitable polycarbonate resins for preparing the copolymer of the present invention are homo-polycarbonates and co-polycarbonates and mixtures thereof.

The polycarbonates generally have a weight average molecular weight of 10,000 to 200,000, preferably 20,000 to 80,000, and their melt flow rate, per ASTM D-1238 at 300° C, is about 1 to about 65 g/10 min., preferably about 2 to 15 g/10 min. They may be prepared, for example, by the known diphasic interface process from a carbonic acid derivative such as phosgene and dihydroxy compounds by polycondensation (see DE 2,063,050; 2,063,052; 1,570,703; 2,211,956; 2,211,957 and 2,248,817; French Patent 1,561,518; and the monograph by H. Schnell,"Chemistry and Physics of Polycarbonates", Interscience Publishers, New York, New York, 1964).

In the present context, dihydroxy compounds suitable for the preparation of the polycarbonates of the invention conform to the structural formulae (1) or (2), 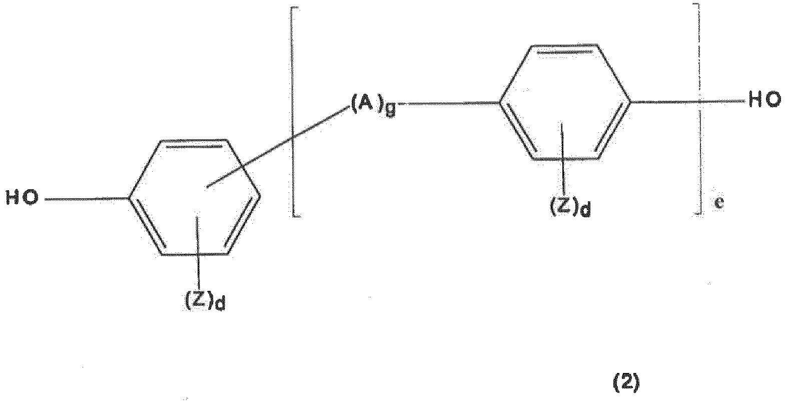 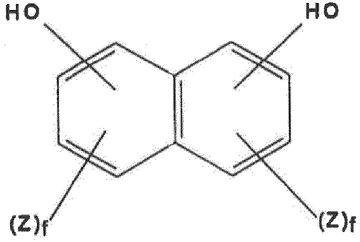 wherein
A denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, a thionyl group (-SO-) or a sulfonyl group (-S0₂-) or a radical conforming to 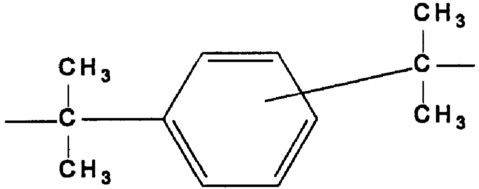 e and g both denote the number 0 to 1; Z denotes F, CI, Br or C₁-C₄ alkyl and if several Z radicals are substituents in one aryl radical, they may be identical or different from one another; d denotes an integer of from 0 to 4; and f denotes an integer of from 0 to 3.

Among the dihydroxy compounds useful in the practice of the invention are hydroquinone, resorcinol, bis- (hydroxyphenyl)-alkanes, bis(hydroxyphenyl)-ethers, bis- (hydroxyphenyl)-ketones, bis-(hydroxyphenyl)sulfoxides, bis-(hydroxyphenyl)-sulfides, bis-(hydroxyphenyl)-sulfones, α,α-bis-(hydroxyphenyl)-diisopropyl-benzenes, as well as their nuclear- alkylated compounds and dihydroxydiphenyl cycloalkanes. These and further suitable aromatic dihydroxy compounds are described, for example, in US-Patents 5,227,458; 5,105,004; 5,126,428; 5,109,076; 5,104,723; 5,086,157; 3,028,356; 2,999,835; 3,148,172; 2,991,273; 3,271,367; and 2,999,846.

Further examples of suitable bisphenols are 2,2-bis- (4-hydroxyphenyl)-propane (bisphenol A), 2,4-bis- (4-hydroxyphenyl)-2-methylbutane, 1,1-bis- (4-hydroxyphenyl)-cyclohexane, α,α'-bis- (4-hydroxy- phenyl)-p-diisopropylbenzene, 2,2-bis-(3-methyl-4-hydroxyphenyl)propane, 2,2-bis- (3-chloro-4-hydroxyphenyl)-propane, bis-(3, 5-dimethyl-4hydroxyphenyl)-methane, 2,2-bis- (3, 5-dimethyl-4-hydroxyphenyl)-propane, bis-(3, 5-dimethyl-4-hydroxyphenyl)-sulfide, bis- (3, 5-dimethyl-4-hydroxy- phenyl)-sulfoxide, bis-(3, 5-dimethyl-4-hydroxyphenyl)-sulfone, dihydroxybenzophenone, 2,4-bis- (3, 5-dimethyl-4-hydroxyphenyl)-cyclohexane, a,a'-bis-(3, 5-dimethyl-4-hydroxyphenyl)-p-diisopropylbenzene and 4,4'-sulfonyl diphenol.

Examples of particularly preferred aromatic bisphenols are 2,2-bis-(4-hydroxyphenyl)-propane, 2,2-bis-(3, 5-dimethyl-4-hydroxyphenyl)propane, 1,1-bis-(4-hydroxyphenyl)-cyclohexane and 1,1-bis- (4-hydroxyphenyl)-3,3,5-trimethylcyclohexane. The most preferred bisphenol is 2,2-bis-(4-hydroxyphenyl)-propane (bisphenol A).

The polycarbonates of the invention may entail in their structure units derived from one or more of the suitable bisphenols.

Among the resins suitable in the practice of the invention are phenolphthalein-based polycarbonates, copolycarbonates and terpolycarbonates such as are described in US-Patents 3,036,036 and 4,210,741, both incorporated by reference herein.

The polycarbonates of the invention may be branched by condensing therein small quantities,e. g. 0.05 to 2.0 mole % (relative to bisphenols) of polyhydroxy compounds.

Polycarbonates of this type have been described, for example, in German Offen-legungsschriften DE 1,570,533; 2,116,974 and 2,113,374; British Patents 885,442 and 1,079,821 and U. S. Patent 3,544,514. The following are some examples of polyhydroxyl compounds which may be used for this purpose: phloroglucinol; 6-tri-(4-hydroxyphenyl)-heptane; 1,1,1-tri-(4-hydroxyphenyl)-ethane; tri- (4-hydroxyphenyl)-phenylmethane; 2,2-bis- [4, 4-(4,4'-dihydroxydiphenyl)]-cyclohexyl-propane; 2,4-bis- (4-hydroxy-1-isopropylidine)-phenol; 2,6-bis- (2'-dihydroxy-5'-methylbenzyl)-4-methylphenol ; 2,4- dihydroxybenzoic acid; 2- (4-hydroxyphenyl)-2- (2, 4-dihydroxy-phenyl)-propane and 1,4-bis- (4, 4'-dihydroxytriphenylmethyl)-benzene. Some of the other polyfunctional compounds are 2,4-dihydroxy-benzoic acid, trimesic acid, cyanuric chloride and 3,3-bis-(4-hydroxyphenyl)-2-oxo-2, 3-dihydroindote.

In addition to the polycondensation process mentioned above, other processes for the preparation of the polycarbonates of the invention are polycondensation in a homogeneous phase and transesterification. The suitable processes are disclosed in the incorporated herein by reference US-Patents 3,028,365; 2,999,846; 3,153,008 and 2,991,273. The preferred process for the preparation of polycarbonates is the interfacial polycondensation process. Other methods of synthesis in forming the polycarbonates of the invention such as disclosed in US 3,912,688, may be used.

Suitable polycarbonate resins are available in commerce, for instance, Makrolon^{®} FCR, Makrolon 2600, Makrolon 2800 and Makrolon 3100, all of which are bisphenol based homopolycarbonate resins differing in terms of their respective molecular weights and characterized in that their melt flow indices (MFR) per ASTM D-1238 are about 16.5 to 24, 13 to 16, 7.5 to 13.0 and 3.5 to 6.5 g/10 min., respectively. These are products of Bayer MaterialScience.

A polycarbonate resin suitable in the practice of the invention is known and its structure and methods of preparation have been disclosed, for example, in US-Patents 3,030,331; 3,169,121; 3,395,119; 3,729,447; 4,255,556; 4,260,731; 4,369,303; and 5,227,458.

As already mentioned above, in addition, the composition of the invention may advantageously contain usual additives (D) such as plasticizers, waxes, antioxidants, plating additives, silicone oil, stabilizers, flame-retardants, fibers, mineral fibers, mineral fillers, dyes, pigments and the like.

The preparation of the inventive polymer composition follows conventional procedures which are well known in the art. Usually, however, they are extrusion blended or compounded in a high intensity blender such as a Banbury Mixer or twin-screw extruder.

The inventive thermoplastic molding composition can be formed into shaped articles by a variety of means such as injection molding, extrusion, compression forming, vacuum forming, blow molding etc. well established in the art.

One further subject of the invention is the use of the inventive polymer blend for electroplating.

A further subject of the invention is a metal-plated shaped article comprising the afore-mentioned inventive polymer blend. The surface of the shaped article is at least partially or preferably totally coated with one or more electroplated metal.

The metal-plated shaped article is obtainable by usual processes for metal plating of polymer blends such as a i) conventional electroplating process or ii) a direct plating process. Such processes have been already described and are known in the art.

A suitable conventional electroplating process i) usually comprises the following steps:
i1) providing of a substrate made from the (inventive) polymer blend,
i2) optionally cleaning/rinsing,
i3) etching,
i4) activation,
i5) acceleration,
i6) electroless chemical metal plating (e.g. nickel),
i7) deposition of one or more metal layers
(e.g. copper, nickel, chromium) by electroplating.

A suitable direct plating process ii) usually comprises the following steps: ii1) providing of a substrate made from the inventive polymer blend, ii2) optionally cleaning/rinsing, ii3) etching, ii4) activation, ii5) deposition of one or more metal layers by electroplating (e.g. copper, nickel, chromium).

For the preparation of the metal-plated shaped article the conventional electroplating process is preferred.

The etching process is carried out by use of usual etching reagents such as a system based on chromic acid. For the activation and acceleration step commonly used agents for this purpose can be used. Pd/Sn-solutions for activation are preferably used.

The thickness of the single layers is in the range of from 0.1 to 50 µm. The chemical deposited layer, if present, is usually a thin layer in the range of from 0.1 to 0.5 µm. The top layer is preferably a copper, nickel or chromium layer. In automotive applications the top layer is usually a chromium layer.

A further subject of the invention is the use of the afore-mentioned inventive metal-plated - in particular chromium-plated - shaped article comprising the inventive polymer composition for automotive applications, in particular exterior applications such as automotive front grilles and wheel covers.

The metal-plated polymer blend shows an improved adhesion between the metal layer and the plastic material. Furthermore the plating grade and thermal cycling adherence of the inventive polymer blend is improved and the mechanical properties are excellent.

The invention is further described by the following examples and claims.

### EXAMPLES

### Components used

### Polycarbonate (component C)

A linear polycarbonate based on bisphenol A, having a melt viscosity of 4.5 grams per 10 minutes at 300° C with 1.2 kg load; ASTM D 1238.

### ABS Graft Polymer 1 (component A)

29 parts by weight (calculated as solids) of an anionically emulsified polybutadiene latex with a mean particle diameter d50 of 305 nm and a gel content of 55 wt. %, produced by free-radical seed polymerization using a polybutadiene seed latex with a mean particle diameter d50 of 111 nm, and 29 parts by weight (calculated as solids) of an anionically emulsified polybutadiene latex with a mean particle diameter d50 of 412 nm and a gel content of 84 wt. % produced by free-radical seed polymerization using a polybutadiene seed latex with a mean particle diameter d50 of 137 nm, are adjusted with water to a solids content of ca. 20 wt. %, heated to 59°C, following which 0.5 part by weight of potassium peroxodisulfate (dissolved in water) is added.

42 parts by weight of a mixture of 73 wt. % of styrene, 27 wt. % of acrylonitrile and 0.12 part by weight of tert.-dodecyl mercaptan are then metered in uniformly within 6 hours; parallel to this 1 part by weight (calculated as solids) of the sodium salt of a resin acid mixture (Dresinate 731, Abieta Chemie GmbH, Gersthofen, Germany, dissolved in alkaline adjusted water) is metered in over a period of 6 hours. During the course of the 6 hours the reaction temperature is raised from 59°C to 80°C. After a post-reaction time of 2 hours at 80°C the graft latex is coagulated, after adding ca. 1.0 part by weight of a phenolic antioxidant, with a magnesium sulfate/acetic acid mixture, and after washing with water the resultant moist powder is dried at 70°C.

### ABS Graft Polymer 2

50 parts by weight (calculated as solids) of an anionically emulsified polybutadiene latex with a mean particle diameter d50 of 137 nm and a gel content of 88 wt. %, produced by free-radical seed polymerization using a polybutadiene seed latex with a mean particle diameter d50 of 48 nm are adjusted with water to a solids content of ca. 20 wt. %, heated to 59°C, following which 0.5 part by weight of potassium peroxodisulfate (dissolved in water) is added.

50 parts by weight of a mixture of 73 wt. % of styrene, 27 wt. % of acrylonitrile and 0.15 part by weight of tert.-dodecyl mercaptan are then metered in uniformly within 6 hours; parallel to this 1 part by weight (calculated as solids) of the sodium salt of a resin acid mixture (Dresinate 731, Abieta Chemie GmbH, Gersthofen, Germany, dissolved in alkaline adjusted water) is metered in over a period of 6 hours. During the course of the 6 hours the reaction temperature is raised from 59°C to 80°C. After a post-reaction time of 2 hours at 80°C, the graft latex is coagulated, after adding ca. 1.0 part by weight of a phenolic antioxidant, with a magnesium sulfate/acetic acid mixture, and after washing with water the resultant moist powder is dried at 70°C.

### ABS Graft Polymer I (ABS I)

mixture of ABS Graft Polymers 1 and 2 in a weight ratio of 60:40

### ABS Graft polymer 3

Graft polymer prepared by free-radical emulsion polymerization (using a redox initiator system consisting of tert.-butyl hydroperoxide and sodium ascorbate) of 40 parts by weight of styrene and acrylonitrile in a ratio by weight of 73:27, in the presence of 60 parts by weight of a particulate, crosslinked polybutadiene rubber latex (mean particle diameter d50=345 nm), working up by precipitation under the action of a 1:1 magnesium sulfate/acetic acid mixture, washing with water and drying at 70°C.

### ABS Graft Polymer 4

Graft polymer prepared by free-radical emulsion polymerization (using a persulfate initiator system consisting of potassium peroxodisulfate) of 40 parts by weight of styrene and acrylonitrile in a ratio by weight of 73:27 in the presence of 60 parts by weight of a particulate, crosslinked polybutadiene rubber latex (mean particle diameter d50=345 nm), working up by precipitation under the action of a 1:1 magnesium sulfate/acetic acid mixture, washing with water and drying at 70°C.

### ABS Graft Polymer II (ABS II)

Co-Precipitated mixture of ABS Graft Polymers 3 and 4 in a weight ratio of 75:25
75 parts by weight (based on solids) of the graft polymer 3 in latex form and 25 parts by weight (based on solids) of the graft polymer 4 in latex form are mixed homogeneously; the graft polymer latex mixture is then precipitated under the action of a 1:1 magnesium sulfate/acetic acid mixture. After washing with water, drying is carried out at 70°C.

### Vinyl copolymer (component B)

SAN - a copolymer of styrene and acrylonitrile made by continuous bulk polymerization. The copolymer contains 75.5 weight % styrene and 24.5 weight % acrylonitrile.

### Molding compositions

Each of the exemplified compositions (see Table 1) contained 0.2 parts by weight of butyl stearate per 100 parts by weight resin of the total of components A, B, and C.

An extrusion process physically blended the components of the polymer blends of each example. This was carried out in a commercially available 34 mm Leistritz twin-screw extruder (24: 1 L : D screw; 250 revolutions per minute; at 260°C). A commercial antioxidant having no criticality in the present context was included in the compositional makeup at a level of 0.1% by weight. The die temperature was 260°C. The extruded material is passed through a water bath and pelletized.

The pelletized material is then injection molded into specimens for testing. A part of the specimens was directly tested in a multi axial impact test according to DIN EN ISO 6603-2.

Melt flow (MVR 220 °C / 10 kg) was measured according to ISO 1133.

Peel strength was measured according to ASTM-D 903.

The "Temperature range possible for molded plaques" was determined by step-wise increasing injection molding temperature, beginning at 170 °C, by 10 °C. Samples were taken at each step and the optical quality of the sample was determined by a collective of 5 persons. Scales of optical assessments were:
1 = glossy, defect free surface; 2 = glossy surface but with small defects;
3 = partly glossy and significant defects; 4 = incomplete filling of the mold.

Once a specimen scored between 1 and 2, the related injection molding temperature was approved as being suitable for molding.

Another part of the specimens was metal plated:
Plated plaques tested for the peel test according to DIN 53494 were prepared under the following electroplating bath conditions:

| | | |
|---|---|---|
| Chromic acid etching: | 9 minutes at 68.4°C | |
| Activator: | 3 minutes at 24.6°C | pretreatment: colloidal |
| Accelerator: | 3 minutes at 50.4°C | pretreatment: colloidal |
| Chemical Nickel: | 10 minutes at 63.9°C | |
| Pre-Nickel: | 10 minutes at 50.7°C | |
| Copper: | 60 minutes at 20°C | current density: 3 A/dm² |

The copper layer had a thickness of 40 µm.

Plated plaques tested for the multi axial impact test according to DIN EN ISO 6603-2 were prepared under the following electroplating bath conditions:

| | | |
|---|---|---|
| Chromic acid etching: | 9 minutes at 67.9°C | |
| Activator: | 3 minutes at 25.5°C | pretreatment: colloidal |
| Accelerator: | 3 minutes at 50.2°C | pretreatment: colloidal |
| Chemical Nickel: | 10 minutes at 64.1°C | |
| Pre-Nickel: | 10 minutes at 51.3°C | |
| Copper: | 30 minutes at 20°C | current density: 3 A/dm² |
| Bright Nickel: | 10 minutes at 53.3°C | current density: 3 A/dm² |

Table 1 shows the composition (in weight percent) of the polymer blends tested and the corresponding mechanical data obtained by the afore-mentioned tests.

**Table 1**

| | Comparative example 1 | Example 1 | non-inventive Example 2 | non-inventive Example 3 | Comp. ex. 2 |
|---|---|---|---|---|---|
| PC (wt.%) | 0 | 30 | 45 | 45 | 60 |
| SAN (wt.%) | 63 | 35 | 20 | 20 | 20 |
| ABS graft polymer (wt. %) | 37 | 35 | 35 | 35 | 20 |
| ABS graft polymer | ABS I | ABS I | ABS I | ABS II | ABS I and ABS II |
| Temperature range possible for molded plaques (precondition: not higher than 300 °C due to formation of high amounts of residual monomers) | 180-300 °C | 220-300 | 230-300 | 230-300 | 250-300 |
| Impact energy of molded plaque (J) (Energy at maximal Force) | 53 | 72 | 64 | 65 | >70 |
| Impact energy of metal plated molded plaque (J) | 9 | 23 | 17 | 16 | n/a |
| maximal Impact force of plated plaque (N) | 2800 | 4300 | 3600 | 3650 | n/a |
| Peel strength (N/cm) | 7 | 9,3 | 8 | 7,7 | n/a |
| Typical Melt flow MVR at 220°C/10 min | >10 | 5-10 | <5 | <5 | <5 |
| Hole size after impact (1= biggest, 3= smallest) | 1 | 3 | 2 | 2 | n/a |
| Classification of Dart Impact testing | YU (yielding unstable cracking) | YS (yielding stable cracking) | YU | YU | n/a |

| | | | | | |
|---|---|---|---|---|---|
| n/a: not available | | | | | |

The test results show that the inventive polymer blend shows improved mechanical properties in comparison to polymer blends with different components. The test results of the inventive metal-plated polymer blend show an improved adhesion (peel strength) between the metal layer and the polymer material and mechanical properties in comparison to non-inventive polymer blends.

## Claims

1. Thermoplastic molding composition comprising components A) to C):
A) 30 to 40 wt.% of at least one graft rubber copolymer (A) obtained by emulsion polymerization of styrene and acrylonitrile in a weight ratio of 95:5 to 50:50, styrene and/or acrylonitrile being able to be partially or completely replaced by [alpha]-methylstyrene, methyl methacrylate or N-phenylmaleimide or mixtures thereof, in the presence of at least one polymer latex (a) of a conjugated diene;
B) 30 to 40 wt.% of at least one rubber free vinyl copolymer of 50 to 99 percent (B1) and 1 to 50 percent (B2), the percent being relative to the weight of the copolymer, where (B1) is at least one member selected from the group consisting of styrene, α-methyl styrene, nucleus-substituted styrene, and methyl methacrylate and where (B2) is at least one member selected from the group consisting of acrylonitrile, methyl methacrylate, maleic anhydride, N-alkyl-substituted maleic imide and N-aryl-substituted maleic imide; and
C) 25 to 34 wt.-% by weight of at least one aromatic polycarbonate;
wherein the sum of components A), B) and C) totals 100% by weight, and
wherein the thermoplastic molding composition comprises as component A two or more graft rubber polymers (A1), (A2), (A3) etc. which are different in the mean particle diameter d₅₀ of the polymer latex (a) of the conjugated diene.

2. Thermoplastic molding composition according to claim 1, comprising as component B a copolymer of styrene and acrylonitrile, which is made from 69 to 81% by weight of styrene and from 19 to 31% by weight of acrylonitrile.

3. Thermoplastic molding composition according to claim 1 or 2, comprising as component B 30 to 40 wt.% of a copolymer of styrene and acrylonitrile, which is made by continuous bulk polymerization, and which contains from 69 to 81% by weight of styrene and from 19 to 31% by weight of acrylonitrile, in particular contains 75.5 weight % of styrene and 24.5 weight % of acrylonitrile.

4. Thermoplastic molding composition according to any one of claim 1 to 3, comprising as component A a graft rubber copolymer obtained by emulsion polymerization of styrene and acrylonitrile in a weight ratio of 80:20 to 65:35 in the presence of at least one polymer latex (a) of butadiene.

5. Thermoplastic molding composition according to any of claims 1 to 4, comprising as component A three graft rubber polymers (A1), (A2), (A3), wherein the mean particle diameter d₅₀ of the polymer latex (a1) is 230 to 330 nm, the mean particle diameter d₅₀ of the polymer latex (a2) is 340 to 480 nm, and the mean particle diameter d₅₀ of the polymer latex (a3) is 10 to 220 nm.

6. Use of the thermoplastic molding composition according to any of claims 1 to 5 for electroplating.

7. A shaped article comprising the thermoplastic molding composition according to any of claims 1 to 5, which surface is coated with an electroplated metal.

8. Use of the metal-plated shaped article according to claim 7 for automotive applications.

9. An electroplating process comprising the following steps:
i1) providing of a substrate made from a thermoplastic molding
composition according to any of claims 1 to 5,
i2) optionally cleaning/rinsing,
i3) etching,
i4) activation,
i5) acceleration,
i6) electroless chemical metal plating, in particular nickel,
i7) deposition of one or more metal layers, in particular copper, nickel or chromium) by electroplating.

## Patentansprüche

1. Thermoplastische Formmasse, umfassend Komponenten A) bis C):
A) 30 bis 40 Gew.-% mindestens eines Pfropfkautschuk-Copolymers (A), erhalten durch Emulsionspolymerisation von Styrol und Acrylnitril in einem Gewichtsverhältnis von 95:5 bis 50:50, wobei Styrol und/oder Acrylnitril teilweise oder vollständig durch [alpha]-Methylstyrol, Methylmethacrylat oder N-Phenylmaleimid oder Gemische davon ersetzt werden können, in Gegenwart mindestens eines Polymerlatex (a) eines konjugierten Diens;
B) 30 bis 40 Gew.-% mindestens eines kautschukfreien Vinylcopolymers aus 50 bis 99 Prozent (B1) und 1 bis 50 Prozent (B2), wobei die Prozentwerte auf das Gewicht des Copolymers bezogen sind, wobei (B1) mindestens ein Element ausgewählt aus der Gruppe bestehend aus Styrol, α-Methylstyrol, kernsubstituiertem Styrol und Methylmethacrylat ist und wobei (B2) mindestens ein Element ausgewählt aus der Gruppe bestehend aus Acrylnitril, Methylmethacrylat, Maleinsäureanhydrid, N-Alkyl-substituiertem Maleinsäureimid und N-Aryl-substituiertem Maleinsäureimid ist; und
C) 25 bis 34 Gew.-% mindestens eines aromatischen Polycarbonats;
wobei die Summe der Komponenten A), B) und C) insgesamt 100 Gew.-% beträgt, und
wobei die thermoplastische Formmasse als Komponente A zwei oder mehr Pfropfkautschuk-Copolymere (A1), (A2), (A3) usw. umfasst, die sich in dem mittleren Partikeldurchmesser d₅₀ des Polymerlatex (a) des konjugierten Diens unterscheiden.

2. Thermoplastische Formmasse gemäß Anspruch 1, umfassend als Komponente B ein Copolymer von Styrol und Acrylnitril, hergestellt aus 69 bis 81 Gew.-% Styrol und 19 bis 31 Gew.-% Acrylnitril.

3. Thermoplastische Formmasse gemäß Anspruch 1 oder 2, umfassend als Komponente B 30 bis 40 Gew.-% eines Copolymers aus Styrol und Acrylnitril, das durch kontinuierliche Massepolymerisation hergestellt ist, und das 69 bis 81 Gew.-% Styrol und 19 bis 31 Gew.-% Acrylnitril enthält, insbesondere 75,5 Gew.-% Styrol und 24,5 Gew.-% Acrylnitril enthält.

4. Thermoplastische Formmasse gemäß einem der Ansprüche 1 bis 3, umfassend als Komponente A ein Pfropfkautschuk-Copolymer, erhalten durch Emulsionspolymerisation von Styrol und Acrylnitril in einem Gewichtsverhältnis von 80:20 bis 65:35 in Gegenwart mindestens eines Polymerlatex (a) aus Butadien.

5. Thermoplastische Formmasse gemäß einem der Ansprüche 1 bis 4, umfassend als Komponente A drei Pfropfkautschuk-Copolymere (A1), (A2), (A3), wobei der mittlere Partikeldurchmesser d₅₀ des Polymerlatex (a1) 230 bis 330 nm beträgt, der mittlere Partikeldurchmesser d₅₀ des Polymerlatex (a2) 340 bis 480 nm beträgt und der mittlere Partikeldurchmesser d₅₀ des Polymerlatex (a3) 10 bis 220 nm beträgt.

6. Verwendung der thermoplastischen Formmasse gemäß einem der Ansprüche 1 bis 5 zum Elektroplattieren.

7. Formkörper, umfassend die thermoplastische Formmasse gemäß einem der Ansprüche 1 bis 5, deren Oberfläche mit einem elektroplattierten Metall beschichtet ist.

8. Verwendung des metallplattierten Formkörpers gemäß Anspruch 7 für Automobilanwendungen.

9. Elektroplattierungsverfahren, umfassend folgende Schritte:
i1) Bereitstellen eines Substrats, das aus einer thermoplastischen Formmasse gemäß einem der Ansprüche 1 bis 5 hergestellt ist,
i2) gegebenenfalls Reinigen/Spülen,
i3) Ätzen,
i4) Aktivierung,
i5) Beschleunigung,
i6) stromlose chemische Metallplattierung, insbesondere Nickel,
i7) Abscheiden einer oder mehrerer Metallschichten, insbesondere Kupfer, Nickel oder Chrom, durch Elektroplattierung.

## Revendications

1. Composition de moulage thermoplastique comprenant les composants A) à C) :
A) 30 à 40 % en poids d'au moins un copolymère de caoutchouc greffé (A) obtenu par polymérisation en émulsion de styrène et d'acrylonitrile dans un rapport en poids de 95:5 à 50:50, le styrène et/ou l'acrylonitrile pouvant être partiellement ou complètement remplacés par le [alpha]-méthylstyrène, méthacrylate de méthyle ou le N-phénylmaléimide ou des mélanges de ceux-ci, en présence d'au moins un polymère latex (a) d'un conjugué diène ;
B) 30 à 40 % en poids d'au moins un copolymère vinylique sans caoutchouc de 50 à 99 pour cent (B1) et 1 à 50 pour cent (B2), le pourcentage étant par rapport au poids du copolymère, où (B1) est au moins un membre choisi dans le groupe constitué des styrène, α-méthylstyrène, styrène à substitution du noyau, et méthacrylate de méthyle et où (B2) est au moins un membre choisi dans le groupe constitué des acrylonitrile, méthacrylate de méthyle, anhydride maléique, imide maléique substitué par N-alkyle et imide maléique substitué par N-aryle ; et
C) 25 à 34 % en poids en poids d'au moins un polycarbonate aromatique ;
dans laquelle la somme de composants A), B) et C) est, au total, de 100 % en poids, et
dans laquelle la composition de moulage thermoplastique comprenant, en tant que composant A, deux ou plus de deux polymères de caoutchouc greffé (A1), (A2), (A3) etc., qui sont différents en termes de diamètre de particule moyen d₅₀ du latex polymère (a) du diène conjugué.

2. Composition de moulage thermoplastique selon la revendication 1, comprenant, en tant que composant B, un copolymère de styrène et d'acrylonitrile, qui est constitué de 69 à 81 % en poids de styrène et de 19 à 31 % en poids d'acrylonitrile.

3. Composition de moulage thermoplastique selon la revendication 1 ou 2, comprenant, en tant que composant B, 30 à 40 % en poids d'un copolymère de styrène et d'acrylonitrile, qui est fabriqué par polymérisation en masse continue, et qui contient de 69 à 81 % en poids de styrène et de 19 à 31 % en poids d'acrylonitrile, en particulier contient 75,5 % en poids de styrène et 24,5 % en poids d'acrylonitrile.

4. Composition de moulage thermoplastique selon l'une quelconque des revendications 1 à 3, comprenant, en tant que composant A, un copolymère de caoutchouc greffé obtenu par polymérisation en émulsion de styrène et d'acrylonitrile dans un rapport en poids de 80:20 à 65:35, en présence d'au moins un latex polymère (a) de butadiène.

5. Composition de moulage thermoplastique selon l'une quelconque des revendications 1 à 4, comprenant, en tant que composant A, trois polymères de caoutchouc greffé (A1), (A2), (A3), dans laquelle le diamètre de particule moyen d₅₀ du latex polymère (a1) est de 230 à 330 nm, le diamètre de particule moyen d₅₀ du latex polymère (a2) est de 340 à 480 nm, et le diamètre de particule moyen d₅₀ du latex polymère (a3) est de 10 à 220 nm.

6. Utilisation de la composition de moulage thermoplastique selon l'une quelconque des revendications 1 à 5 pour dépôt électrolytique.

7. Article formé comprenant la composition de moulage thermoplastique selon l'une quelconque des revendications 1 à 5, ladite surface étant revêtue avec un dépôt électrolytique de métal.

8. Utilisation de l'article à placage métallique formé selon la revendication 7 pour des applications dans l'industrie automobile.

9. Procédé de dépôt électrolytique comprenant les étapes suivantes :
i1) fourniture d'un substrat constitué d'une composition de moulage thermoplastique selon l'une quelconque des revendications 1 à 5,
i2) facultativement nettoyage/rinçage,
i3) gravure,
i4) activation,
i5) accélération,
i6) dépôt de métal chimique autocatalytique, en particulier de nickel,
i7) dépôt d'une ou plusieurs couches de métal, en particulier de cuivre, de nickel ou de chrome, par dépôt électrolytique.
